# FASCICULE DE BREVET EUROPEEN

(11) **EP 1 161 605 B1**
(45) Date de publication et mention de la délivrance du brevet: **06.09.2006**
(21) Numéro de dépôt: 00912616.0
(22) Date de dépôt: 16.03.2000
(51) Int. Cl.: E05B 49/00, F16B 2/22

(54) **DIPOSITIF ADAPTE A LIMITER LE FLECHISSEMENT D'UN MOYEN FLEXIBLE, ET BOITIER DE CLE LE COMPORTANT**
VORRICHTUNG ZUM BEGRENZEN DER BIEGUNG EINES FLEXIBLEN MITTELS UND EIN DIESES MITTEL ENTHALTENDES SCHLÜSSELGEHÄUSE
DEVICE FOR LIMITING BENDING IN A FLEXIBLE MEANS AND KEY HOUSING COMPRISING SAME

(30) Priorité: 17.03.1999 FR 9903288
(43) Date de publication de la demande: 12.12.2001
(73) Titulaire: Siemens VDO Automotive S.A.S., 31036 Toulouse Cédex 01 (FR)
(72) Inventeur: CHAILLIE, Frédéric, F-31140 Pechbonnieu (FR)
(74) Mandataire: Berg, Peter
(86) Numéro de dépôt international: PCT/EP2000/002358
(87) Numéro de publication internationale: WO 2000/055457

(56) Documents cités:
- EP-A- 0 580 886
- DE-A- 4 226 579
- FR-A- 2 518 194
- US-A- 4 591 285
- US-A- 5 207 754

## Description

L'invention est du domaine des dispositifs à piles, pour lesquelles des butées de confinement sont nécessaires. Il concerne en particulier le blocage en position de pile bouton dans un boîtier de télécommande (encore appelé clé codée), d'ouverture / fermeture des ouvrants d'un véhicule.

On connaît classiquement des clés automobiles utilisant un code électronique transmis vers le véhicule lorsque l'utilisateur appuie sur un bouton situé sur la clé. Ces clés nécessitent en général une source d'énergie électrique interne, qui prend usuellement la forme d'une pile bouton, qui est un disque mince, par exemple de 16 mm de diamètre pour 2 mm d'épaisseur.

De telles piles doivent pouvoir être installées une première fois à la mise en service de la clé, puis éventuellement être changées lors de leur épuisement après quelques années. Aussi, le boîtier de la clé est réalisé classiquement en deux parties emboîtables, et le dispositif de blocage en position de la pile comporte une ou plusieurs butées fixes, en matière plastique rigide, et un doigt de verrouillage mince, dont la flexibilité permet par déformation élastique d'introduire la pile en place, et qui vient se replacer ensuite dans une position empêchant le mouvement de la pile hors de son logement.

On comprend que de tels dispositifs ont pour inconvénient que le doigt de verrouillage est très fragile, et la manipulation, tant lors de la première installation de pile qu'au remplacement de celle-ci, peut conduire à la rupture du doigt de verrouillage. La pile n'est plus alors convenablement bloquée dans son logement.

EP 0 580 886 décrit un dispositif de confinement d'une pîle plate de type bouton au moyen d'ergots et / ou d'appuis associés à des lames de ressorts destinés à réaliser les contacts électriques. Le problème que cherche à résoudre ce document consiste à éviter de laisser un accès aux composants électroniques lors d'un changement de pîle. Le problème de l'usure et de la rupture des ergots n'est pas abordé.

DE 4226579 décrit un boîtier de télécommande automobile intégrant un dispositif de confinement de piles plates, de type bouton, dans lequel les piles sont maintenues en place par le couvercle et de ce fait, tombent à l'ouverture du boîtier. Il n'y a pas d'ergots ou de moyens de retenu de la pîle dans la partie inférieure du boîtier et le problème de l'usure et de la rupture de ces éléments n'est pas abordé.

La présente invention répond- au problème précédemment exposé et propose à cet effet, un dispositif simple à fabriquer et bon marché.

Suivant l'invention, le dispositif adapté à limiter le fléchissement d'un moyen flexible selon une direction de flexion comporte une butée placée selon cette direction à distance de l'extrémité déformable du moyen flexible. L'invention vise un dispositif de confinement d'une pile plate du type bouton dans un boîtier de clé automobile comportant une partie inférieure supportant au moins un doigt de verrouillage flexible selon une direction de flexion, caractérisé en ce que la partie inférieure comporte une butée de limitation de flexion du doigt de verrouillage selon cette direction, la dite butée étant espacée du doigt de verrouillage dans la direction de flexion de manière suffisante pour permettre la mise en place de la pile à confiner tout en empêchant le doigt de verrouillage de sortir de son domaine élastique de flexion.

Préférentiellement, le moyen de limitation de flexion est une butée disposée à faible distance du doigt de verrouillage, selon la direction de flexion, l'espacement entre le doigt de verrouillage et la butée étant suffisant pour permettre la mise en place de l'objet à confiner tout en empêchant le doigt de verrouillage de sortir de son domaine élastique de flexion.

Selon un mode particulier de réalisation, correspondant en particulier à une application à un boîtier de clé électronique, le dispositif comporte également une partie supérieure, emboîtable sur la partie inférieure, cette partie supérieure comportant préférentiellement un coin destiné à venir se placer, lorsque le boîtier est assemblé, entre le doigt de verrouillage et la butée.

On comprend que ce doigt est destiné à maintenir le doigt de verrouillage en position de blocage de l'objet confiné, lorsque le boîtier est fermé.

Pour limiter le mouvement de l'objet confiné dans le cas de rupture du doigt de verrouillage, la partie supérieure du boîtier comporte avantageusement une saillie d'appui sur l'objet, lorsque la partie supérieure est assemblée sur la partie inférieure .

La description et les dessins qui suivent permettront de mieux comprendre les buts et avantages de l'invention. Il est clair que cette description n'est donnée qu'à titre d'exemple, et n'a pas de caractère limitatif.

Dans les dessins :
- la figure 1 représente, en vue de dessus, une partie inférieure de clé automobile;
- la figure 2 représente une vue en coupe du boîtier de clé;
- la figure 3 représente de façon schématique une vue en coupe de côté d'une variante de dispositif selon l'invention.

Une clé à code d'automobile comporte classiquement un boîtier en deux parties : une partie inférieure 1 et une partie supérieure 2. Ces deux parties 1, 2 s'emboîtent par un dispositif d'emboîtement démontable 3, de nature classique et non détaillé ici.

La clé à code comporte alors usuellement dans sa partie supérieure 2 un bouton de commande 4 dont la pression met en marche un circuit électronique 5, destiné à envoyer un message électromagnétique d'identification vers un véhicule distant.

Dans les dispositifs actuels, la clé comporte encore un paneton 6, destiné à la mise en marche du véhicule.

Dans le but d'alimenter le circuit électronique 5, une pile 7, de type pile bouton, est logée dans le fond de la partie inférieure 1 du boîtier de clé, formant socle.

La pile bouton 7 repose sur un ressort lame 8, pour faciliter son extraction et assurer un contact électrique avec une des bornes de la pile bouton 7. Ce ressort lame 8 est fixé par enfoncement en force sur un picot 9, et sa seconde extrémité 10 sert de point de premier contact d'alimentation au circuit électronique 5.

Un second ressort assure un contact électrique par sa première extrémité 11 avec l'autre électrode de la pile bouton 7, et sa seconde extrémité 12 sert de second contact électrique d'alimentation au circuit électronique 5. On comprend que ces deux ressorts permettent donc l'alimentation du circuit électronique 5 par la pile bouton 7, de manière amovible lorsque les deux parties du boîtier sont séparées.

La pile bouton 7 est maintenue en position dans son logement, d'une part par deux butées rigides 13, 14, de forme sensiblement en "L" inversé, comportant un ergot s'étendant légèrement au dessus de la pile bouton 7, placées par exemple à environ 90° l'une de l'autre le long de la circonférence de la pile bouton 7.

D'autre part, un doigt de verrouillage 15 flexible, est disposé sur la partie inférieure 1 du boîtier de manière à se trouver sensiblement, le long de la circonférence de la pile bouton 7, en position opposée aux butées rigides 13, 14.

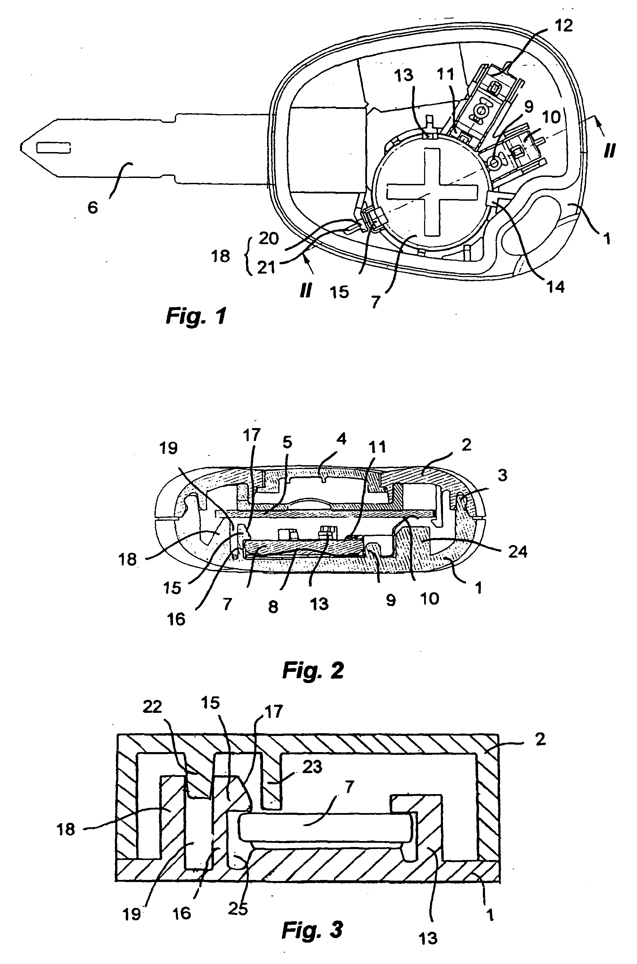

On définit pour la suite de la description une direction de flexion du doigt de verrouillage 15 (qui est ici commune avec la direction définie par le doigt de verrouillage 15 et le centre de la pile bouton 7), correspondant au plan de coupe ||-|| sur la figure 1, une direction transversale comme étant la direction perpendiculaire à cette direction de flexion dans le plan de la pile bouton 7, et une direction verticale comme étant la direction perpendiculaire au plan principal de la clé (c'est à dire perpendiculaire au plan de la figure 1).

Ce doigt de verrouillage 15 comporte une lame mince 16 s'étendant sensiblement selon la direction verticale, terminée par une partie s'étendant au dessus du logement de la pile bouton 7. Cette lame mince 16 a sa plus petite épaisseur sur la direction de flexion, et de ce fait, elle confère au doigt de verrouillage 15 sa flexibilité selon cette direction. Dans l'exemple présent non limitatif, cette épaisseur est de l'ordre de 0,5 millimètre.

La partie supérieure 17 du doigt de verrouillage 15 est biseautée de manière à ce que le simple appui sur une pile bouton 7 disposée au dessus de son logement entraîne le recul élastique par flexion du doigt de verrouillage 15 selon la direction de flexion, et permette le passage de la pile bouton 7 vers son logement.

Une butée 18 de limitation de recul élastique du doigt de verrouillage 15 est disposée légèrement en arrière de l'extrémité déformable (haute) du doigt de verrouillage 15, selon la direction de flexion du doigt de verrouillage 15.

L'espacement 19 laissé entre le doigt de verrouillage 15 et la butée 18 de limitation de recul élastique est suffisant pour permettre la mise en place de la pile bouton 7, tout en empêchant le doigt de verrouillage 15 de sortir de son domaine élastique de flexion selon la direction de flexion.

La butée 18 est préférentiellement réalisée sous forme de "T", comme on le voit sur la figure 1, avec une partie plane 20 sensiblement parallèle à la lame mince 16 du doigt de verrouillage 15, et un renfort mécanique 21 perpendiculaire à celle partie plane 20, et par exemple de forme sensiblement triangulaire, comme illustré à la figure 2.

La butée 18 est avantageusement d'une hauteur adaptée à venir prendre appui sur le circuit électronique 5, lorsque le boîtier de clé est fermé, de manière à assurer un meilleur maintien mécanique de celui-ci.

Les butées rigides 13, 14, le doigt de verrouillage 15 et la butée limite 18 sont réalisés de façon classique, et par exemple directement lors du moulage de la partie inférieure 1 du boîtier.

Dans une variante de réalisation, illustrée à la figure 3, la partie supérieure 2 du boîtier de clé comporte un coin 22 destiné à venir se placer, lorsque le boîtier est assemblé, entre le doigt de verrouillage 15 et la butée 18. La partie supérieure 2 de boîtier comporte également une saillie 23 d'appui sur la pile bouton 7, lorsque le boîtier est fermé. Cette saillie 23 est destinée à éviter que la pile bouton ne puisse bouger de son logement, à supposer que le doigt de verrouillage 15 soit brisé et ne retienne donc plus la pile en place.

Dans une autre variante, une butée de ressort 24 est disposée sous la seconde extrémité 10 du ressort lame 8, de manière à limiter également le débattement de cette extrémité de ressort lame, et donc à réduire le risque de déformation non réversible ou de rupture.

Dans encore une autre variante (figure 3), la pile bouton 7 est posée sur un socle formé dans la partie inférieure 1, ce socle étant placé légèrement au dessus du pied du doigt de verrouillage 15, déterminant ainsi une hauteur complémentaire 25, qui accroît la flexibilité élastique de la lame mince 16.

Dans encore une autre variante non représentée, les butées rigides 13, 14 sont remplacées par des doigts de verrouillage 15 flexibles, ces doigts de verrouillages 15 comportant des butées 18 de limitation de flexion.

## Revendications

1. Dispositif de confinement d'une pile plate (7) du type bouton dans un boîtier de clé automobile comportant une partie inférieure (1) supportant au moins un doigt de verrouillage (15) flexible selon une direction de flexion, **caractérisé en ce que** la partie inférieure (1) comporte une butée (18) de limitation de flexion du doigt de verrouillage selon cette direction, la dite butée étant espacée du doigt de verrouillage dans la direction de flexion de manière suffisante pour permettre la mise en place de la pile (7) à confiner tout en empêchant le doigt de verrouillage (15) de sortir de son domaine élastique de flexion.

2. Dispositif selon la revendication 1, **caractérisé en ce que** la butée (18) est réalisée en forme de T, avec une partie plane (20) perpendiculaire à la direction de flexion du moyen de verrouillage (15) et un renfort mécanique plat (21) parallèle à cette direction de flexion.

3. Dispositif selon la revendication 1, **caractérisé en ce qu'**il comporte en outre une partie supérieure (2), emboîtable sur la partie inférieure (1), cette partie supérieure (2) comportant un coin (22) destiné à venir se placer entre le doigt de verrouillage (15) et la butée (18), lorsque le boîtier est assemblé,

4. Dispositif selon la revendication 3, **caractérisé en ce que** la partie supérieure (2) du boîtier comporte en outre une saillie (23) d'appui sur la pile (7), lorsque la partie supérieure (2) est assemblée sur la partie inférieure (1).

## Claims

1. Device for confining a flat battery (7) of the button type in an automotive key housing, comprising: a lower portion (1) supporting at least one locking finger (15) flexible in one bending direction, **characterised in that** the lower portion (1) comprises an abutment (18) for limiting bending of the locking finger in the bending direction, said abutment being spaced from the locking finger in the bending direction sufficiently to permit the emplacement of the battery (7) to be confined whilst preventing the locking finger (15) from leaving its resilient bending range.

2. Device according to claim 1, **characterised in that** the abutment (18) is T-shaped, with a flat portion (20) perpendicular to the bending direction of the locking finger (15), and a flat mechanical reinforcement (21) parallel to said bending direction of the locking finger.

3. Device according to claim 1, further comprising an upper portion (2), nestable on the lower portion (1), said upper portion (2) comprising a wedge (22) adapted to be disposed, when the housing is assembled, between the locking finger (15) and the abutment (18).

4. Device according to claim 2, **characterised in that** the upper portion (2) of the housing also comprises a projection (23) bearing on the battery (7), when the upper portion (2) is assembled on the lower portion (1).

## Patentansprüche

1. Vorrichtung zum Einschließen einer flachen Batterie (7) vom Knopfzellentyp in einem Automobilschlüsselgehäuse, die einen unteren Teil (1) umfasst, der mindestens einen Verriegelungsstift (15) trägt, der in eine Biegerichtung flexibel ist, **dadurch gekennzeichnet, dass** der untere Teil (1) einen Anschlag (18) zum Begrenzen der Biegung des Verriegelungsstiftes in diese Richtung umfasst, wobei der Anschlag in der Biegerichtung in einer Weise vom Verriegelungsstift beabstandet ist, die ausreicht, um das Einsetzen der einzuschließenden Batterie (7) zu ermöglichen und gleichzeitig zu verhindern, dass der Verriegelungsstift (15) aus seinem elastischen Biegebereich austritt.

2. Vorrichtung nach Anspruch 1, **dadurch gekennzeichnet, dass** der Anschlag (18) in T-Form mit einem ebenen Teil (20), der senkrecht zur Biegerichtung des Verriegelungsmittels (15) ist, und einer flachen mechanischen Verstärkung (21), die parallel zu dieser Biegerichtung ist, ausgeführt ist.

3. Vorrichtung nach Anspruch 1, **dadurch gekennzeichnet, dass** sie ferner einen oberen Teil (2) umfasst, der auf dem unteren Teil (1) in Eingriff gebracht werden kann, wobei dieser obere Teil (2) eine Ecke (22) umfasst, die dazu bestimmt ist, sich zwischen den Verriegelungsstift (15) und den Anschlag (18) zu setzen, wenn das Gehäuse zusammengebaut wird.

4. Vorrichtung nach Anspruch 3, **dadurch gekennzeichnet, dass** der obere Teil (2) des Gehäuses ferner einen Vorsprung (23) zur Auflage auf der Batterie (7) umfasst, wenn der obere Teil (2) mit dem unteren Teil (1) zusammengebaut wird.
